# EUROPEAN PATENT SPECIFICATION

(11) **EP 2 545 877 B1**
(45) Date of publication and mention of the grant of the patent: **03.01.2018**
(21) Application number: 12176105.0
(22) Date of filing: 12.07.2012
(51) Int. Cl.: A61C 5/62, B65D 83/00

(54) **Liquid container**
Flüssigkeitsbehälter
Récipient pour liquide

(30) Priority: 13.07.2011 AU 2011902791
(43) Date of publication of application: 16.01.2013
(73) Proprietor: SDI Limited, Bayswater, VIC 3153 (AU)
(72) Inventor: Cheetham, Joshua James, Windsor, Victoria 3181 (AU); Clayton, Anthony Brian, Hughesdale, Victoria (AU); Cosgriff, Amanda Jane, Glenhuntly, Victoria 3163 (AU)
(74) Representative: Minoja, Fabrizio

(56) References cited:
- EP-A1- 1 205 196
- US-A1- 2002 044 816
- US-B1- 6 447 476
- US-B2- 7 861 897

## Description

The present invention relates to a liquid container.

US6,447,476 B1 represent the closest prior art to the present invention.

The liquid container of the present invention is according to claim 1.

The present invention will now be described, by way of example, with reference to the accompanying drawings, in which:
Figure 1 is an upper perspective view of a liquid container in accordance with the present invention;
Figure 2 is a sectional perspective view of the liquid container of Figure 1 in a non-activated condition;
Figure 3 is a view similar to Figure 2 with the liquid container in an activated condition;
Figure 4a is a vertical sectional view of the liquid container of Figures 1 to 3 in empty condition and non activated;
Figure 4b is a view similar to Figure 4a showing the liquid container partially activated;
Figure 4c is a view similar to Figure 4b with the liquid container further partially activated;
Figure 4d is a view similar to Figure 4c with the liquid container fully activated;
Figures 5a to 5b are views corresponding with equivalent figures to Figure 4 showing the liquid container containing liquid;
Figure 6 is a view similar to Figure 2 of a first alternative embodiment of liquid container in accordance with the present invention; and
Figure 7 is a view similar to Figure 2 of a second alternative embodiment of liquid container in accordance with the present invention.

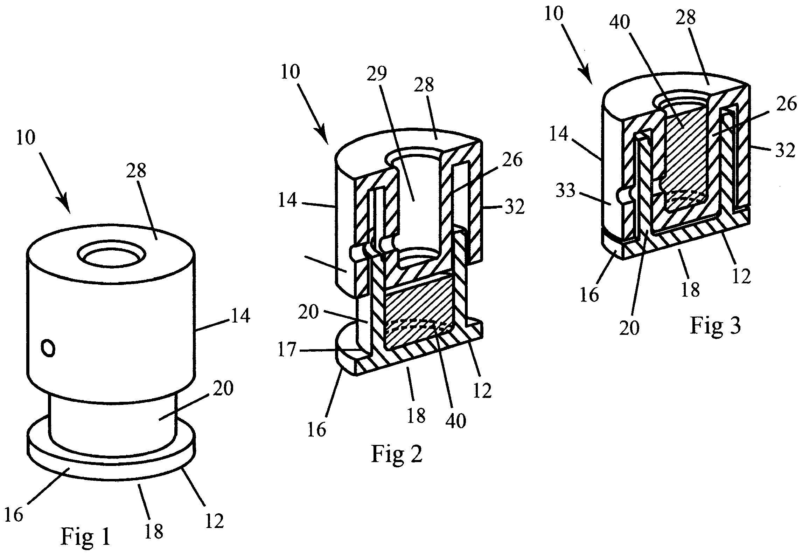

In Figures 1 to 5 of the accompanying drawings there is shown a liquid container 10 comprising a base portion 12 and a cap portion 14.

The base portion 12 comprises a base 16. The base 16 is arranged to provide adequate stability for the liquid container 10 when placed on a flat surface. For this reason the base 16 is the widest part of the base portion 12 and has a flat lower surface 18.

Further, an upstanding curved wall 20 projects upwardly from the base 16. The wall 20 is endless and is preferably circular. Also, the wall 20 is preferably integrally connected to the base.

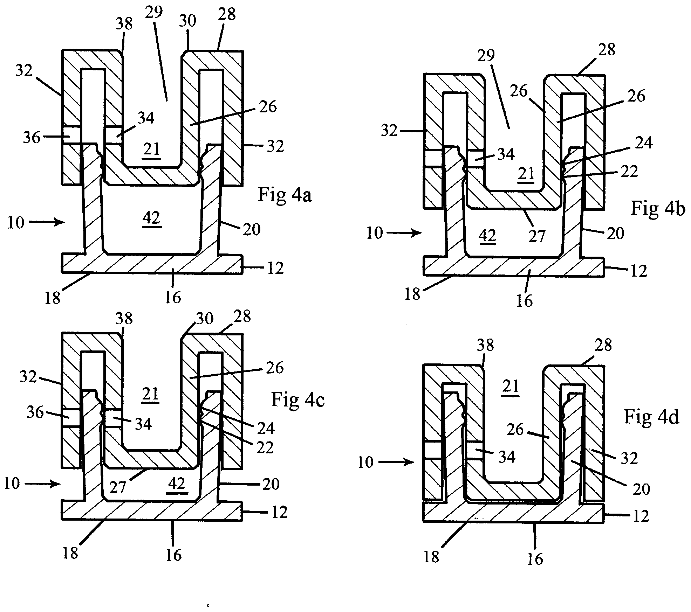

Further, the wall 20 has an upper open top 21 (see Figure 4).

Further, the wall 20 has adjacent an upper end thereof a seal 22 which extends around an entire inner surface of the wall 20. The seal 22 may be constituted of one or more portions which may be part circular or part elliptical in cross section.

An additional seal 24 may be provided adjacent the seal 22 to facilitate enhanced sealing in use.

The cap portion 14 has an inner wall 26 having an outer periphery which is curved and endless and is of complementary shape and size to the wall 20. Further, the inner wall 26 is arranged to fit within the wall 20 as shown in Figure 4. Further, the cap portion 14 has a lower end 27 adjacent a bottom of the inner wall 26

Thus, the cap portion 14 defines an unsealed recess 29 between the inner wall 26 and the lower end 27. Further, the inner wall 26 has a peripheral flange 28 extending outwardly from an end 30 thereof remote from the lower end 27. A cover 32 depends from an outer end of the flange 28 and extends downwardly parallel to but spaced from the inner wall 26. The cover 32 is thus curved in horizontal cross-section and has an endless curved wall 33.

Further, the inner wall 26 is provided with an aperture 34 which extends through the entire thickness thereof. Similarly, the cover 32 has a similar aperture 36 in alignment with the aperture 34.

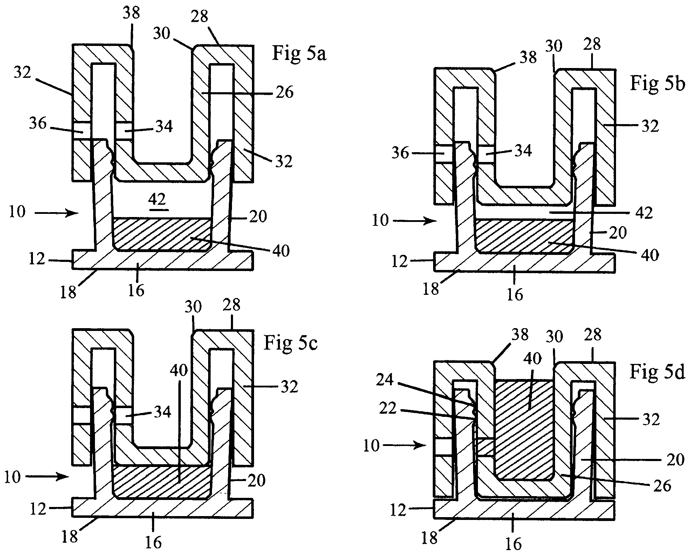

The cap portion 14 has an upper open top 38. Further, as shown in Figure 5a, initially the inner wall 26 below the aperture 34 is in engagement with the seals 22 and 24.

In use, the cap portion 14 is placed on the base 16 as shown in Figure 4a with the inner wall 26 engaging the wall 20. Also, as shown in Figure 4 the cap portion 14 is arranged to be pushed downwardly or depressed manually so that the inner wall 26 engages progressively with the wall 20 until the lower end 27 engages with the base 16 as shown in Figures 4b, 4b and 4d.

As also shown in Figure 5, prior to engagement of the cap portion 14 with the wall 20, a quantity of liquid 40 may be placed in the base 16 within the wall 20. Initially the cap potion 14 engages with the seals 22 and 24 to seal hermetically a chamber 42 defined by the wall 20 and the lower end 27. As the cap portion 14 is progressively depressed the lower end 27 engages with the liquid 40 as shown in Figure 5c in such a way that the liquid 40 is forced up between the wall 20 and the inner wall 26 until it reaches the aperture 34. The liquid 40 is then caused to flow into the recess 29 through the aperture 34 as shown in Figure 5d. In Figure 5 of the drawings a single aperture 34 is shown but other variations may contain one or more apertures including shapes other than circular in cross-section.

As the cap portion 14 is depressed further more liquid enters the cap portion 14. The displaced liquid then enters the recess 29. The recess 29 contains a small inserted plastics component or sponge material to prevent liquid splashing out due to excessive flow but not hinder access to the liquid could be used.

Further, once the aperture 34 has reached and passed the seals 22 and 24 as shown in Figure 5a, the chamber 42 is unsealed.

Further, in the condition shown in Figure 5d the liquid is accessible to a user by means of a brush or applicator which is preferably disposable.

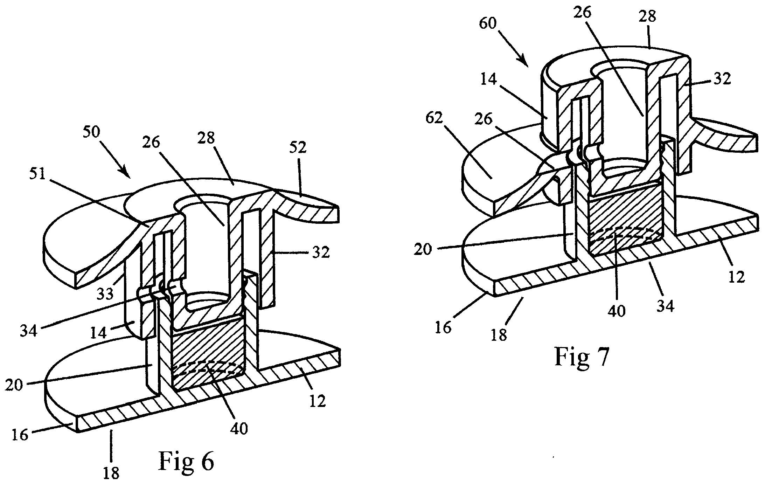

In Figure 6 there is shown an embodiment 50. Like numbers denote like parts to those found in Figures 1 to 5. In this embodiment a flange 52 extends outwardly from an upper end 51 of the cap portion 14 for engagement by a finger of a user.

In Figure 7 there is shown an alternative embodiment 60 where a flange 62 similar to the flange 52 extends outwardly from the cover 32 adjacent the aperture 36.

As can be seen in Figures 6 and 7 the base 16 is relatively large compared to the base of the embodiment of Figures 1 to 5.

The seals 22 and 24 could be replaced by other equivalent seal designs.

The liquid container of the present invention is intended for use with liquid materials generally but more specifically for liquid dental materials.

Modifications and variations as would be apparent to a skilled addressee are deemed to be within the scope of the present invention.

## Claims

1. A liquid container (10) comprising a base portion (12) and a cap portion (14) the base portion (12) having an upstanding endless wall (20), the cap portion (14) being engaged with the base portion (12) and being arranged for relative slidable linear movement relative to the base portion (12) the cap portion (14) defining an upwardly facing recess (29), the cap portion (14) and the base portion (12) defining initially a chamber (42) having a hermetic seal, the cap portion (14) having a lower end (27) adjacent a bottom of an inner endless wall (26), the chamber (42) being arranged for receiving a liquid (40) such that upon relative movement of the cap portion (14) and the base portion (12) in which the cap portion (14) enters the chamber (42) the hermetic seal is broken and liquid is urged from the base portion (12) into the recess (29) of the cap portion (14), the cap portion (14) having the inner endless wall (26) which is of complementary shape and size to the endless wall of the base portion (12), wherein an endless cover (32) integral with and spaced from the inner endless wall (26) of the cap portion (14) extends downwardly relative to the endless wall (20) of the base portion (12) externally thereof, the endless cover (32) being connected to the inner endless wall (26) of the cap portion (14) by a flange (28) extending laterally outwardly from the inner endless wall (26) of the cap portion (14) from an end thereof remote from the lower end (27), wherein the base portion (12) comprises a base (16) which is the widest part of the base portion (12) and has a flat lower surface (18) so as to provide stability for the liquid container (10) when placed on a flat surface, **characterized in that** said recess (29) contains a small inserted plastic component or sponge material preventing liquid splashing out due to excessive flow but which does not hinder access to the liquid in the recess.

2. A liquid container (10) according to claim 1, **characterized in that** the base (16) has the upstanding endless wall (20) projecting upwardly therefrom, the upstanding endless wall (20) having an open top and being provided on an inner surface thereof adjacent an upper end with a seal (22) which extends around an entire inner surface of the endless wall (20) such that initially a region of the upstanding endless wall (20) below the seal (22) is hermetically sealed by a lower end (27) of the cap (14).

3. A liquid container (10) according to claim 1, **characterized in that** the inner endless wall (26) of said cap portion (14) is provided at an intermediate height thereof with an aperture (34) extending through the entire thickness of the endless wall (26) thereof such that as the cap portion (14) is forced into the base portion (12) the hermetic seal is broken as the aperture (34) aligns with the seal (22) such that liquid (40) in the said chamber (42) is forced up by the lower end (27) of the cap portion (14) between the upstanding endless wall (20) of the base (16) and the inner endless wall (26) of the cap portion (14) to flow into the recess (29) of the cap portion (14) through the aperture (34).

4. A liquid container (10) according to claim 1, **characterized in that** the liquid (40) is contained initially in the region between the lower end (27) of the cap (14) and the base portion (12).

5. A liquid container (10) according to claim 1, **characterized in that** a flange (52) extends laterally outwardly from an upper end (51) of the cap portion (14) for engagement by a finger of a user.

6. A liquid container (10) according to claim 1, **characterized in that** a flange (62) extends laterally outwardly from the endless cover (32) adjacent an aperture (36) in the endless cover (32).

7. A liquid container (10) according to claim 3, **characterized in that** the endless cover (32) is provided with an aperture (36) which extends through the entire thickness thereof and is in alignment with the aperture (34)

## Patentansprüche

1. Flüssigkeitsbehälter (10), der einen Basisteil (12) und einen Deckelteil (14) umfasst, wobei der Basisteil (12) eine emporstehende Endloswand (20) aufweist, wobei der Deckelteil (14) auf den Basisteil (12) aufgesteckt ist und so angeordnet ist, dass er eine relative lineare Gleitbewegung relativ zum Basisteil (12) ausführen kann, wobei der Deckelteil (14) eine aufwärts weisende Ausnehmung (29) definiert, wobei der Deckelteil (14) und der Basisteil (12) zunächst eine hermetisch abgedichtete Kammer (42) definieren, wobei der Deckelteil (14) ein unteres Ende (27) aufweist, das an einen Boden einer inneren Endloswand (26) angrenzt, wobei die Kammer (42) so angeordnet ist, dass sie eine Flüssigkeit (40) aufnehmen kann, so dass bei einer relativen Bewegung des Deckelteils (14) und des Basisteils (12), bei der der Deckelteil (14) in die Kammer (42) eintritt, die hermetische Abdichtung aufbricht und Flüssigkeit aus dem Basisteil (12) in die Ausnehmung (29) des Deckelteils (14) gedrückt wird, wobei der Deckelteil (14) die innere Endloswand (26) aufweist, deren Form und Größe zu der der Endloswand des Basisteils (12) komplementär ist, wobei sich eine endlose Abdeckung (32), die einstückig an die innere Endloswand (26) des Deckelteils (14) angeformt und von dieser beabstandet ist, relativ zur Endloswand (20) des Basisteils (12) und außerhalb derselben nach unten erstreckt, wobei die endlose Abdeckung (32) durch einen Flansch (28), der sich ausgehend von der inneren Endloswand (26) des Deckelteils (14) von einem Ende derselben, das von dem unteren Ende (27) entfernt ist, seitlich nach außen erstreckt, mit der inneren Endloswand (26) des Deckelteils (14) verbunden ist, wobei der Basisteil (12) eine Basis (16) umfasst, bei der es sich um den breitesten Teil des Basisteils (12) handelt und die eine flache untere Fläche (18) aufweist, so dass sie für Stabilität des Flüssigkeitsbehälters (10) sorgt, wenn dieser auf eine flache Oberfläche gestellt wird, **dadurch gekennzeichnet, dass** die Ausnehmung (29) eine kleine eingefügte Kunststoffkomponente oder ein Schwammmaterial enthält, die oder das verhindert, dass Flüssigkeit aufgrund von überschüssigem Durchfluss herausspritzt, die oder das aber nicht den Zugang zu der Flüssigkeit in der Ausnehmung behindert.

2. Flüssigkeitsbehälter (10) gemäß Anspruch 1, **dadurch gekennzeichnet, dass** die Basis (16) die emporstehende Endloswand (20) aufweist, die ausgehend von derselben nach oben ragt, wobei die emporstehende Endloswand (20) ein offenes Oberteil aufweist und an einer inneren Fläche desselben, die an ein oberes Ende angrenzt, angeordnet ist, wobei sich eine Abdichtung (22) um die gesamte innere Fläche der Endloswand (20) herum erstreckt, so dass zunächst ein Bereich der emporstehenden Endloswand (20) unterhalb der Abdichtung (22) durch ein unteres Ende (27) des Deckelteils (14) hermetisch abgedichtet ist.

3. Flüssigkeitsbehälter (10) gemäß Anspruch 1, **dadurch gekennzeichnet, dass** die innere Endloswand (26) des Deckelteils (14) auf einer Zwischenhöhe desselben angeordnet ist, wobei sich eine Öffnung (34) durch die gesamte Dicke der Endloswand (26) erstreckt, so dass dann, wenn der Deckelteil (14) in den Basisteil (12) gedrückt wird, die hermetische Dichtung aufbricht, während die Öffnung (34) mit der Dichtung (22) fluchtet, so dass in der Kammer (42) befindliche Flüssigkeit (40) durch das untere Ende (27) des Deckelteils (14) zwischen der emporstehenden Endloswand (20) der Basis (16) und der inneren Endloswand (26) des Deckelteils (14) hochgedrückt wird, so dass sie durch die Öffnung (34) in die Ausnehmung (29) des Deckelteils (14) fließt.

4. Flüssigkeitsbehälter (10) gemäß Anspruch 1, **dadurch gekennzeichnet, dass** die Flüssigkeit (40) zunächst in dem Bereich zwischen dem unteren Ende (27) des Deckelteils (14) und dem Basisteil (12) enthalten ist.

5. Flüssigkeitsbehälter (10) gemäß Anspruch 1, **dadurch gekennzeichnet, dass** sich ein Flansch (52) ausgehend von einem oberen Ende (51) des Deckelteils (14) zum Angriff durch einen Finger eines Anwenders seitlich nach außen erstreckt.

6. Flüssigkeitsbehälter (10) gemäß Anspruch 1, **dadurch gekennzeichnet, dass** sich ein Flansch (62) ausgehend von der endlosen Abdeckung (32) und angrenzend an eine Öffnung (36) in der endlosen Abdeckung (32) seitlich nach außen erstreckt.

7. Flüssigkeitsbehälter (10) gemäß Anspruch 3, **dadurch gekennzeichnet, dass** die endlose Abdeckung (32) mit einer Öffnung (36) versehen ist, die sich durch die gesamte Dicke derselben erstreckt und sich mit der Öffnung (34) in Flucht befindet.

## Revendications

1. Récipient (10) pour un liquide comprenant une portion de base (12) et une portion de capuchon (14), la portion de base (12) possédant une paroi dressée sans fin (20), la portion de capuchon (14) étant mise en contact avec la portion de base (12) et étant conçue pour effectuer un mouvement linéaire coulissant relatif par rapport à la portion de base (12), la portion de capuchon (14) définissant un évidement (29) orienté vers le haut, la portion de capuchon (14) et la portion de base (12) définissant dans un premier temps une chambre (42) possédant un joint d'étanchéité hermétique, la portion de capuchon (14) possédant une extrémité inférieure (27) adjacente à une base d'une paroi interne sans fin (26), la chambre (42) étant conçue pour recevoir un liquide (40), d'une manière telle que, lors du mouvement relatif de la portion de capuchon (14) et de la portion de base (12) au cours duquel la portion de capuchon (14) pénètre dans la chambre (42), le joint d'étanchéité hermétique est rompu et du liquide est poussé à partir de la portion de base (12) jusque dans l'évidement (29) de la portion de capuchon (14), la paroi interne sans fin (26) de la portion de capuchon (14) possédant une configuration et une dimension complémentaires à celles de la paroi sans fin de la portion de base (12), dans lequel un recouvrement sans fin (32) réalisé en une seule pièce avec et espacé par rapport à la paroi interne sans fin (26) de la portion de capuchon (14) s'étend vers le bas par rapport à la paroi sans fin (20) de la portion de base (12) à l'extérieur de celle-ci, le revêtement sans fin (32) étant relié à la paroi interne sans fin (26) de la portion de capuchon (14) par une bride (28) s'étendant en direction latérale vers l'extérieur par rapport à la paroi interne sans fin (26) de la portion de capuchon (14) à partir d'une extrémité de cette dernière éloignée de l'extrémité inférieure (27), dans lequel la portion de base (12) comprend une base (16) qui représente la partie la plus large de la portion de base (12) et possède une surface inférieure plate (18) de façon à conférer une stabilité au récipient (10) pour un liquide lorsqu'il est placé sur une surface plate, **caractérisé en ce que** ledit évidement (29) contient un petit composant inséré en matière plastique ou une matière en forme d'éponge empêchant la sortie du liquide par éclaboussement du fait d'un écoulement excessif, mais qui n'entrave pas l'accès au liquide dans l'évidement.

2. Récipient (10) pour un liquide selon la revendication 1, **caractérisé en ce que** la paroi dressée sans fin (20) de la base (16) fait saillie vers le haut par rapport à cette dernière, la paroi dressée sans fin (20) possédant un sommet ouvert et étant munie, sur sa surface interne adjacente à l'extrémité supérieure, d'un joint d'étanchéité (22) qui s'étend autour de l'ensemble de la surface interne de la paroi sans fin (20) d'une manière telle qu'au point de départ, une zone de la paroi dressée sans fin (20) en dessous du joint d'étanchéité (22) est fermée de manière hermétique par une extrémité inférieure (27) du capuchon (14).

3. Récipient (10) pour un liquide selon la revendication 1, **caractérisé en ce que** la paroi interne sans fin (26) de ladite portion de capuchon (14) est munie, à sa hauteur intermédiaire, d'un orifice (34) s'étendant à travers toute l'épaisseur de la paroi sans fin (26), d'une manière telle que lorsque la portion de capuchon (14) est introduite de manière forcée dans la portion de base (12), le joint d'étanchéité hermétique est rompu lorsque l'orifice (34) vient s'aligner avec le joint d'étanchéité (22) d'une manière telle que le liquide (40) dans ladite chambre (42) est poussé vers le haut par l'extrémité inférieure (27) de la portion de capuchon (14) entre la paroi dressée sans fin (20) de la base (16) et la paroi interne sans fin (26) de la portion de capuchon (14) pour s'écouler jusque dans l'évidement (29) de la portion de capuchon (14) à travers l'orifice (34).

4. Récipient (10) pour un liquide selon la revendication 1, **caractérisé en ce que** le liquide (40) est contenu dans un premier temps dans la zone située entre l'extrémité inférieure (27) du capuchon (14) et la portion de base (12).

5. Récipient (10) pour un liquide selon la revendication 1, **caractérisé en ce qu'**une bride (52) s'étend en direction latérale vers l'extérieur par rapport à une extrémité supérieure (51) de la portion de capuchon (14) à des fins de mise en contact avec le doigt d'un utilisateur.

6. Récipient (10) pour un liquide selon la revendication 1, **caractérisé en ce qu'**une bride (52) s'étend en direction latérale vers l'extérieur par rapport au recouvrement sans fin (32) en position adjacente à un orifice (36) dans le recouvrement sans fin (32).

7. Récipient (10) pour un liquide selon la revendication 3, **caractérisé en ce que** le recouvrement sans fin (32) est muni d'un orifice (36) qui s'étend à travers toute l'épaisseur de ce dernier et est mis en alignement avec l'orifice (34).
